**Europäisches Patentamt**

**European Patent Office**

**Office européen des brevets**

(19)

(11) Veröffentlichungsnummer: **0 005 209**
**B1**

(12) # EUROPÄISCHE PATENTSCHRIFT

(45) Veröffentlichungstag der Patentschrift:
**15.07.81**

(21) Anmeldenummer: **79101174.5**

(22) Anmeldetag: **17.04.79**

(51) Int. Cl.³: **H 02 B 13/02,** H 01 H 33/14,
H 01 H 33/42, H 01 H 33/66

(54) **Schalterkombination für Sammelschienenanlagen.**

(30) Priorität: **28.04.78 DE 2818914**

(43) Veröffentlichungstag der Anmeldung:
**14.11.79 Patentblatt 79/23**

(45) Bekanntmachung des Hinweises auf die Patenterteilung:
**15.07.81 Patentblatt 81/28**

(84) Benannte Vertragsstaaten:
**BE CH DE FR GB IT NL SE**

(56) Entgegenhaltungen:
**DE-A-1 943 099**
**DE-A-2 721 258**
**DE-C-1 140 620**
**FR-A-1 533 266**

(73) Patentinhaber: **SIEMENS AKTIENGESELLSCHAFT Berlin
und München, Postfach 22 02 61, D-8000 München 22 (DE)**

(72) Erfinder: **Silbermann, Erich, Damaschkestrasse 61,
D-8521 Bubenreuth (DE)**

Schalterkombination für Sammelschienenanlagen

Die Erfindung betrifft eine Schalterkombination für Sammelschienenanlagen zum Verbinden mindestens einer Sammelschiene mit mindestens einem Abzweig, wobei die Schalterkombination aus einem Rohr mit einer im Rohr axial angeordneten drehbaren Welle besteht, wobei am inneren Umfang des Rohrs stationäre Gegenkontakte angeordnet sind und jeder Gegenkontakt mit einer Phase einer Sammelschiene oder eines Abzweigs verbunden ist und wobei die Welle Kontaktstücke trägt, die in einem Kreisbogen mit einem solchen Durchmesser um die Welle angeordnet sind, dass durch Drehen der Welle eine elektrisch leitende Verbindung zwischen den Kontaktstücken und den zugeordneten Gegenkontakten herstellbar ist.

Eine Schalterkombination dieser Art mit mehrpoligen Lasttrennstellen zum Anschliessen eines Transformators an eine Netzringleitung ist beispielsweise aus der deutschen Offenlegungsschrift 19 43 099 bekannt. Dabei werden ein Transformatoranschluss und die beiden Anschlüsse der Netzringleitung an Kontakte geführt, die am inneren Umfang eines scheibenförmigen Gehäuses liegen. In dem Gehäuse ist in axialer Richtung eine drehbare Welle angeordnet, die mit einem T-förmigen Kontakt drehfest verbunden ist. Der T-förmige Kontakt kann mit den Kontakten am inneren Umfang des flachzylindrischen Gehäuses leitend verbunden werden, wobei die Kontaktstellen als Lasttrennstellen ausgeführt sind. Pro Phase der Ringleitung ist ein gesondertes scheibenförmiges Gehäuse vorhanden, wobei die Gehäuse für mehrere Phasen gleichachsig zu einem Umschaltnetz vereinigt werden können. Mit dieser Anordnung wird es möglich, durch Verdrehen des T-förmigen Kontakts einen Transformator wahlweise an verschiedene Kabel einer Netzringleitungsschleife anzuschliessen und diese Kabel miteinander zu verbinden. Diese Anordnung ist für einen speziellen Anwendungszweck ausgebildet und lässt sich nicht für allgemeine Schaltaufgaben in Sammelschienensystemen verwenden, da beim Umschalten von einer Schaltstellung in eine andere unzulässige Zwischen-Schaltstellungen auftreten würden. Da die Schaltstrecken als Lasttrennstrecken ausgebildet sind, müssten beim Einsatz in Sammelschienenanlagen gesonderte Leistungsschalter vorgesehen werden. Ferner sind gesonderte Möglichkeiten zur Erdung erforderlich.

Aus der DE-PS 11 40 610 ist ein Druckluftschalter mit eingebauter Spannungstrennstelle bekannt, welche mit der Leistungsschaltstelle in Reihe liegt. Beide Schaltstellen sind in einer unter Druck befindlichen Löschkammer aus Isoliermaterial untergebracht. Die als Drehtrenner mit zwei Kontaktstellen ausgeführten Spannungstrennstellen sind koaxial, jedoch axial beabstandet zur Leistungsschaltstelle angeordnet. Die Stromführung erfolgt von einem festen Kontaktteil über den Drehtrenner, einen zweiten festen Kontaktteil, eine Verbindungslasche zur Lasche des festen Kontaktteils der Leistungsschaltstelle über zwei weitere Kontaktteile zu einer weiteren Anschlusslasche. Die Baulänge dieses bekannten Schalters ist wegen der Anordnung von Spannungstrennstelle und Leistungsschaltstrecke in axialem Abstand recht gross.

Aufgabe der Erfindung ist es daher, eine Schalterkombination der eingangs genannten Art für Sammelschienenanlagen so auszugestalten, dass der Leistungsschalter mit den Trennstrecken in einem Gehäuse raumsparend integriert ist.

Diese Aufgabe wird erfindungsgemäss dadurch gelöst, dass die Welle als Schaltrohr ausgebildet ist, das in seinem Inneren konzentrisch zu den Kontaktstücken einen Leistungsschalter enthält, wobei jeder Anschluss des Leistungsschalters mit einem Kontaktstück elektrisch leitend verbunden ist.

Durch diese integrierte Bauweise erhält man eine besonders kompakte Anordnung und einfache Verriegelungsmöglichkeiten zwischen der Betätigung des Leistungsschalters und der Betätigung der Trenn- bzw. Umschaltkontakte.

Für wenigstens einen Teil der Phasen des Schienensystems kann ein gemeinsames Rohr und ein gemeinsames Schaltrohr mit einem alle Phasen schaltenden Leistungsschalter vorhanden sein. Dadurch wird der Aufbau weiter vereinfacht und noch kompakter.

Bei einer Schalterkombination der eingangs genannten Art, bei der die zu verschiedenen Phasen des angeschlossenen Sammelschienensystems gehörenden Kontaktstücke auf einer gemeinsamen Welle in axialem Abstand angeordnet sind, sind zweckmässigerweise für jede Phase des Schienensystems zwei zugeordnete Kontaktstücke vorhanden, die sich auf dem Schaltrohr diametral gegenüberliegen, wobei je zwei einer Phase zugeordnete Kontaktstücke über je eine Schaltstrecke des Leistungsschalters leitend verbindbar sind. Dadurch ergibt sich eine besonders einfache Möglichkeit zur Umschaltung und eine einfache Ausführung für den Leistungsschalter.

Bei einer Schalterkombination der obgenannten Art kann je ein Kontaktstück zweier einer Phase zugeordneter Kontaktstücke mit je einem Erdungskontaktstück elektrisch leitend verbunden sein, wobei jedes Erdungskontaktstück auf dem Schaltrohr in axialem Abstand zum zugehörigen Kontaktstück angeordnet ist und wobei am inneren Umfang des Rohrs je Phase ein geerdeter Gegenkontakt angeordnet ist, mit dem durch Drehen des Schaltrohrs je ein Erdungskontaktstück leitend verbindbar ist. Das stellt eine einfache Möglichkeit dar, Abzweige und Sammelschienen ohne zusätzliche Einrichtungen zu erden. Die Verriegelung zwischen der Betätigung der Erdungseinrichtung und der Betätigung der Trennstrecken bzw. des Leistungsschalters ist wegen der integrierten Anordnung ohne besonderen Aufwand durchführbar.

Bei einer Schalterkombination der obengenannten Art für eine Einfachsammelschiene und einen Abzweig, bei der die Gegenkontakte als Kreisringstücke ausgebildet sind, die in Umfangsrichtung einen Abstand zueinander aufweisen, wobei pro Phase drei Gegenkontakte vorhanden sind, ist zweckmässigerweise je ein Gegenkontakt mit einer Phase der Sammelschiene, je ein Gegenkontakt mit derselben Phase des Abzweigs und je ein Gegenkontakt mit Erde verbunden, wobei die Länge und Lage der Gegenkontakte und die Form der Kontaktstücke so aufeinander abgestimmt sind, dass je nach Stellung des Schaltrohrs der Abzweig mit der Sammelschiene oder Erde oder die Sammelschiene mit Erde durch Schliessen des Leistungsschalters leitend verbindbar sind. Dadurch werden alle Schaltstellungen, die für eine Einfachsammelschiene nötig sind, ermöglicht.

Bei einer Schalterkombination der obengenannten Art für eine Zweifachsammelschiene und einen Abzweig, bei der die Gegenkontakte als Kreisringstücke ausgebildet sind, die in Umfangsrichtung einen Abstand zueinander aufweisen, können pro Phase sechs Gegenkontakte vorhanden sein, wobei je ein Gegenkontakt mit einer Phase der ersten Sammelschiene, je ein Gegenkontakt mit derselben Phase der zweiten Sammelschiene, je ein Gegenkontakt mit derselben Phase des Abzweigs und je drei Gegenkontakte mit Erde verbunden sind, wobei je ein geerdeter Gegenkontakt zwischen dem mit dem Abzweig verbundenen Gegenkontakt und beiden mit den Sammelschienen verbundenen Gegenkontakten liegt und ein weiterer geerdeter Gegenkontakt zwischen den mit den beiden Sammelschienen verbundenen Gegenkontakten liegt und wobei die Länge und Lage der Gegenkontakte und die Form der Kontaktstücke so aufeinander abgestimmt sind, dass je nach Stellung des Schaltrohrs die Phasen des Abzweigs wahlweise mit den entsprechenden Phasen der ersten Sammelschiene oder der zweiten Sammelschiene oder die Phasen der ersten oder der zweiten Sammelschienen oder des Abzweigs mit den jeweils gegenüberliegenden geerdeten Gegenkontakten durch Schliessen des Leistungsschalters leitend verbindbar sind. Dadurch können alle Schaltstellungen, die bei Zweifachsammelschienen nötig sind, hergestellt werden. Bei einer derartigen Ausführung der Schalterkombination erfolgt beim Umschalten des Abzweigs zwischen den beiden Sammelschienen eine Unterbrechung.

Bei einer Schalterkombination für eine Zweifachsammelschiene und einen Abzweig, bei der die Gegenkontakte als Kreisringstücke ausgebildet sind, die in Umfangsrichtung einen Abstand zueinander aufweisen, können pro Phase fünf Gegenkontakte vorhanden sein, wobei je ein Gegenkontakt mit einer Phase der ersten Sammelschiene, je ein Gegenkontakt mit derselben Phase der zweiten Sammelschiene, je ein Gegenkontakt mit derselben Phase des Abzweigs und je zwei Gegenkontakte mit Erde verbunden sind und wobei von den zwei geerdeten Gegenkontakten je Phase ein erster geerdeter Gegenkontakt zwischen dem mit dem Abzweig verbundenen Gegenkontakt und dem mit der ersten Sammelschiene verbundenen Gegenkontakt und ein zweiter geerdeter Gegenkontakt zwischen dem mit dem Abzweig verbundenen Gegenkontakt und dem mit der zweiten Sammelschiene verbundenen Gegenkontakt liegt, wobei die Länge und Lage der Gegenkontakte und die Form der Kontaktstücke so aufeinander abgestimmt sind, dass je nach Stellung des Schaltrohrs die Phasen des Abzweigs wahlweise mit den entsprechenden Phasen der ersten Sammelschiene, der zweiten Sammelschiene oder Erde oder die Phasen der ersten oder zweiten Sammelschiene mit Erde durch Schliessen des Leistungsschalters leitend verbindbar sind und wobei von je zwei einer Phase zugeordneten Kontaktstücken ein Kontaktstück als Kreisringstück ausgebildet ist und dieses Kontaktstück in Umfangsrichtung so lang ist, dass es gleichzeitig mit den entsprechenden Phasen beider Sammelschienen verbindbar ist. Dadurch wird ein unterbrechungsfreies Umschalten des Abzweigs zwischen zwei Sammelschienen möglich.

Zur Ausbildung des Leistungsschalters kann jedes Kontaktstück mit einem feststehenden Schaltkontakt im Inneren des Schaltrohrs leitend verbunden sein und axial im Schaltrohr eine in ihrer Längsrichtung bewegliche isolierte Schaltstange angeordnet sein, die für je zwei einer Phase zugeordneten Schaltkontakte eine Kontaktbrücke trägt. Der auf diese Weise ausgebildete Leistungsschalter kann mit einer axialen Schaltbewegung betätigt werden.

Alternativ dazu kann zur Ausbildung des Leistungsschalters jeweils von zwei einer Phase zugeordneten Kontaktstücken eines mit einem feststehenden Schaltkontakt und eines mit einem beweglichen Schaltkontakt im Inneren des Schaltrohrs leitend verbunden sein und jeder bewegliche Schaltkontakt an einer isolierten Schaltstange befestigt sein, die axial im Schaltrohr angeordnet und in ihrer Längsrichtung beweglich ist. Auch bei dieser alternativen Ausführung des Leistungsschalters wird die Schaltbewegung in axialer Richtung durchgeführt.

Bei einer Einrichtung der obengenannten Art kann das Schaltrohr gasdicht gekapselt sein und die Schaltstange über einen Faltenbalg aus dem Schaltrohr geführt sein. Wenn die Schaltbewegung, wie oben ausgeführt, in axialer Richtung erfolgt, ergibt sich mit dem Faltenbalg eine wirkungsvolle Abdichtung des Schaltrohrs. Das Schaltrohr kann dann z.B. ein Vakuumschaltrohr sein und daher mit besonders geringen Abmessungen ausgebildet werden.

Bei einer Einrichtung der obengenannten Art weist das Schaltrohr zweckmässigerweise einen in axialer Richtung abstehenden Betätigungsansatz auf, der aus dem Rohr herausgeführt und drehbar gelagert ist. Mit diesem Betätigungsansatz kann das Schaltrohr mit den angesetzten Kontaktstücken verdreht und damit der angeschlossene Abzweig umgeschaltet bzw. getrennt werden.

Die Schaltstange wird zweckmässigerweise an dem dem Betätigungsansatz gegenüberliegenden Ende aus dem Schaltrohr herausgeführt und weist eine Kupplung auf, die nur axiale Bewegungen überträgt, wobei diese Kupplung mit einer Betätigungsstange verbunden ist, die aus dem Rohr herausgeführt und in axialer Richtung verschiebbar gelagert ist. Mit dieser Betätigungsstange wird die Schaltstange verschoben und damit der Leistungsschalter betätigt. Wegen der eingebauten Kupplung führt die Betätigungsstange nur axiale Bewegungen aus.

Bei einer Einrichtung der obengenannten Art kann das Rohr gasdicht gekapselt und mit SF$_6$-Gas gefüllt werden. Dadurch wird eine besonders kompakte und gegen Umwelteinflüsse geschützte Bauweise möglich, die insbesondere dann Vorteile bringt, wenn auch die Sammelschienen in SF$_6$-Technik ausgeführt sind.

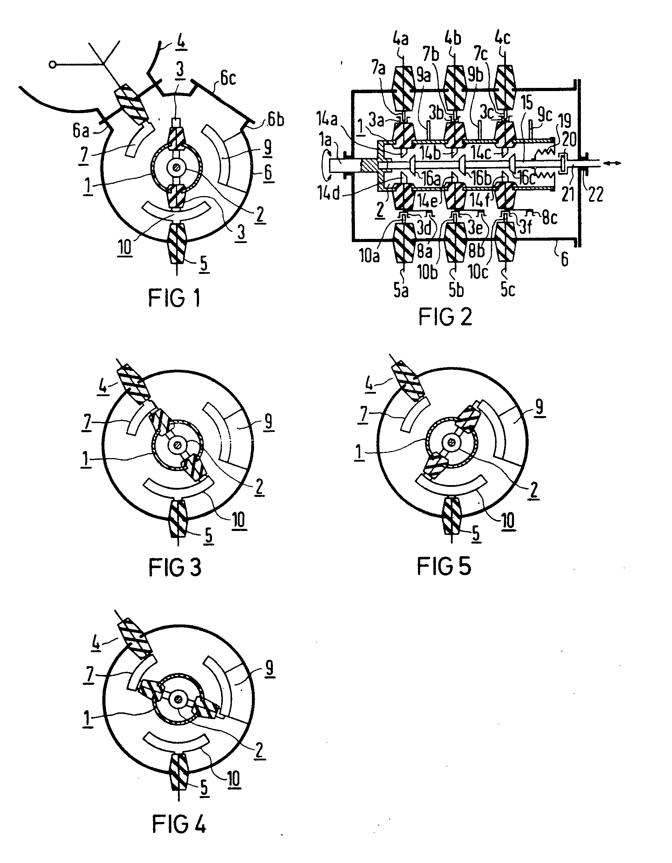

Im folgenden wird die erfindungsgemässe Schalterkombination beispielhaft anhand der Figuren 1 bis 22 erläutert. In den einzelnen Figuren sind gleiche Bauteile mit gleichen Bezugszeichen versehen.

Die Figuren 1 bis 5 zeigen eine Schalterkombination für eine dreiphasige Einfachsammelschiene mit einem Abzweig, wobei Sammelschiene und Schalterkombination in SF$_6$-Technik ausgeführt sind. Dabei zeigt Figur 1 einen Schnitt durch die Schalterkombination in radialer Richtung, während Figur 2 einen Schnitt in axialer Richtung zeigt. Beide Figuren werden im folgenden gemeinsam erläutert:

Am inneren Umfang eines Rohrs 6 sind je Phase drei stationäre Gegenkontakte 7a bis 7c, 9a bis 9c und 10a bis 10c angeordnet. Dabei sind die Gegenkontakte 7a bis 7c gegen das Rohr 6 isoliert und mit den drei Phasen 4a bis 4c der Sammelschiene 4 verbunden. Die Gegenkontakte 10a bis 10c sind ebenfalls gegen das Rohr 6 isoliert und mit drei Phasen 5a bis 5c des Abzweigs 5 verbunden. Die Gegenkontakte 9a bis 9c sind direkt mit dem geerdeten Rohr 6 verbunden. Dabei liegen die zu einer Phase gehörenden Gegenkontakte 7a bis 7c und 10a bis 10c jeweils in einer Ebene senkrecht zur Achse des Rohrs, während die geerdeten Gegenkontakte 9a bis 9c jeweils in einem axialen Abstand zur zugeordneten Phase liegen. Die Gegenkontakte 7a bis 7c, 9a bis 9c und 10a bis 10c sind als Kreisringstücke ausgebildet und weisen in Umfangsrichtung einen Abstand zueinander auf. Die mit der Sammelschiene 4 verbundenen Gegenkontakte 7a bis 7c, die mit dem Abzweig 5 verbundenen Gegenkontakte 10a bis 10c und die mit dem geerdeten Rohr 6 verbundenen Gegenkontakte 9a bis 9c liegen dabei in verschiedenen Segmenten des gedanklich in drei gleiche Segmente geteilten Rohrs 6.

Zentrisch im Rohr 6 ist ein drehbares Schaltrohr 1 angeordnet. Das Schaltrohr 1 weist einen Betätigungsansatz 1a mit einem kleineren Durchmesser als das Schaltrohr 1 auf. Der Betätigungsansatz 1a ist aus dem Rohr 6 herausgeführt und drehbar gelagert. Mit diesem Betätigungsansatz 1a kann das Schaltrohr 1 gedreht werden. Dazu wird der Betätigungsansatz 1a mit einem in den Figuren nicht dargestellten selbstsperrenden Antrieb verbunden. Das Schaltrohr 1 trägt an der Aussenseite Kontaktstücke 3a bis 3f, wobei für jede Phase zwei diametral gegenüberliegende Kontaktstücke vorhanden sind und die Kontaktstücke 3a bis 3f verschiedener Phasen in axialem Abstand zueinander liegen. Von den zwei zu einer Phase gehörenden Kontaktstücken 3a bis 3f ist jeweils ein Kontaktstück 3d bis 3f mit einem Erdungskontaktstück 8a bis 8c, das in axialem Abstand zum zugehörigen Kontaktstück 3d bis 3f liegt, leitend verbunden. Die Gegenkontakte 7, 9 und 10 sind so angeordnet, dass je nach Stellung des Schaltrohrs 1 die Erdungskontaktstücke 8a bis 8c mit den geerdeten Gegenkontakten 9a bis 9c und die Kontaktstücke 3a bis 3f mit den Gegenkontakten 7a bis 7c oder 10a bis 10c leitend verbunden sind. Die Berührungsflächen zwischen den Gegenkontakten und den Kontaktstücken bzw. Erdungskontaktstücken sind dabei als Schleifkontakte ausgeführt, wobei die Kontaktstücke bzw. Erdungskontaktstücke die kreisringförmigen Gegenkontakte federnd umgreifen. Die Schaltstrecken zwischen Kontaktstücken und Gegenkontakten sind keine Leistungsschaltstrecken, sondern Trennstrecken, so dass die Schleifkontakte mit geringem Aufwand ausgeführt werden können.

Die Abstände zwischen den Gegenkontakten 7, 9, 10 in Umfangsrichtung sind so gross, dass die einzelnen Kontaktstücke 3a bis 3f beim Drehen des Schaltrohrs 1 nicht zwei benachbarte Gegenkontakte überbrücken können.

Jedes Kontaktstück 3a bis 3f ist mit einem Schaltkontakt 14a bis 14f eines im Schaltrohr 1 liegenden Leistungsschalters 2 leitend verbunden. Das Schaltrohr 1 ist gasdicht gekapselt und beispielsweise evakuiert. Für jede Phase ist eine Leistungsschaltstrecke vorhanden, bestehend aus zwei Schaltkontakten 14a bis 14c bzw. 14d bis 14f und einer Kontaktbrücke 16a bis 16c. Die drei Kontaktbrücken 16a bis 16c für die drei Phasen sind mit einer isolierten Schaltstange 15 fest verbunden. Bei einer axialen Bewegung der Schaltstange 15 in Betätigungsrichtung werden die Schaltkontakte 14a bis 14c mit den Schaltkontakten 14d bis 14f über die Kontaktbrücken 16a bis 16c leitend verbunden. Damit werden je zwei einer Phase zugeordnete Kontaktstücke 3a bis 3f leitend miteinander verbunden. Ebenso wird jedes der Kontaktstücke 3a bis 3c mit je einem Erdungskontaktstück 8a bis 8c leitend verbunden. Je nach Stellung des Schaltrohrs ergibt sich damit, wie nachfolgend noch besprochen wird, eine leitende Verbindung zwischen entsprechenden Phasen der Sammelschiene und des Abzweigs bzw. Erde.

Die Schaltstange 15 ist zentrisch und axial beweglich im Schaltrohr 1 gelagert. Sie ist aus dem Schaltrohr 1 gasdicht über einen Faltenbalg 19 an dem dem Betätigungsansatz 1a gegenüberliegenden Ende herausgeführt. Die Schaltstange 15 ist über eine Kupplung 20 mit einer Betätigungsstange 21 verbunden, die gasdicht aus dem Rohr 6 herausgeführt und in axialer Richtung verschiebbar gelagert ist. Die Betätigung des Leistungsschalters 2 erfolgt mit der aus dem Rohr 6 herausgeführten Betätigungsstange 21. Die Kupplung 20 ist so ausgeführt, dass sie nur axiale Bewegungen überträgt. Die Betätigungsstange 21 wird daher bei einem Verdrehen des Schaltrohrs 1 nicht mitgedreht, so dass das Lager 22 der Betätigungsstange 21 im Rohr 6 nur für axiale Bewegungen gasdicht ausgelegt sein muss.

Die Figuren 1 bis 5 zeigen die verschiedenen Schaltstellungen, die für eine Einfachsammelschienenanlage in Frage kommen. Figur 1 zeigt den Fall, das der Abzweig 5 von der Sammelschiene 4 getrennt ist, wobei weder der Abzweig 5 noch die Sammelschiene 4 geerdet sind. Wenn man nun den Abzweig 5 mit der Sammelschiene 4 verbinden will, wird zunächst der Leistungsschalter 2 über die Betätigungsstange 21 geöffnet. Anschliessend wird mit dem Betätigungsansatz 1a das Schaltrohr 1 gegen den Uhrzeigersinn verdreht, bis die Kontaktstücke 3a bis 3c mit den Gegenkontakten 7a bis 7c der Sammelschiene 4 und die Kontaktstücke 3d bis 3f mit den Gegenkontakten 10a bis 10c des Abzweigs 5 verbunden sind. Anschliessend wird der Leistungsschalter 2 wieder geschlossen, so dass nun die Sammelschiene 4 dreiphasig mit dem Abzweig 5 verbunden ist. Figur 3 zeigt diesen Schaltzustand.

Soll z.B., wie Figur 4 zeigt, der Abzweig 5 getrennt und die Sammelschiene 4 geerdet werden, so kann dies aus beliebiger Stellung des Schaltrohrs 2 dadurch geschehen, dass zunächst der Leistungsschalter 2 geöffnet wird, dann das Schaltrohr 1 so weit verdreht wird, bis die Kontaktstücke 3a bis 3c mit den Gegenkontakten 7a bis 7c und die Erdungskontaktstücke 8a bis 8c mit den geerdeten Gegenkontakten 9a bis 9c verbunden sind. Anschliessend wird der Leistungsschalter 2 wieder geschlossen.

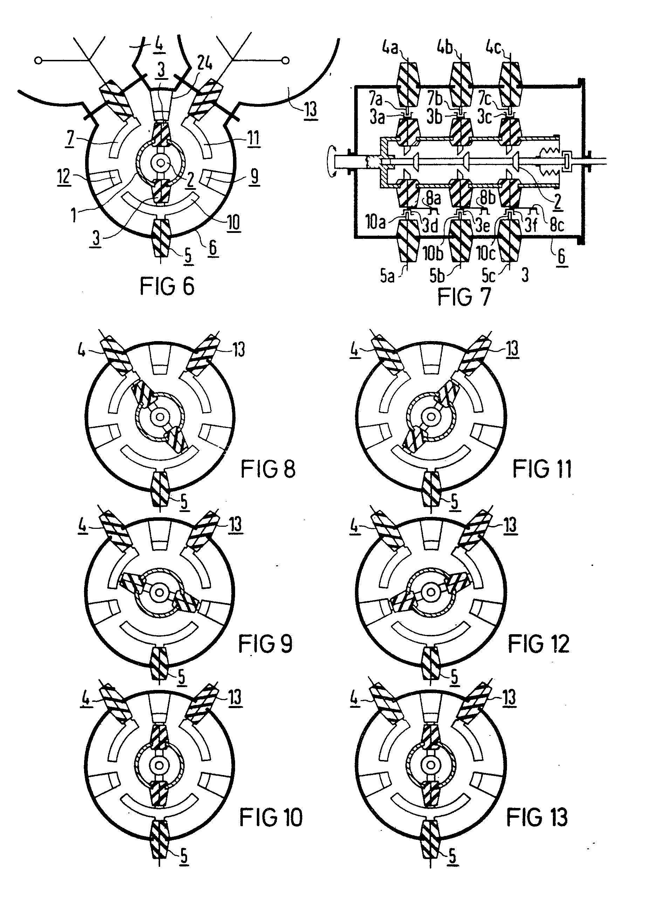

Figur 5 zeigt schliesslich einen weiteren Schaltzustand der Schalterkombination, wobei der Abzweig 5 von der Sammelschiene 4 getrennt und geerdet ist. Dazu wird zunächst der Leistungsschalter 2 geöffnet und das Schaltrohr 1 mit der Welle 1a solange verdreht, bis die Kontaktstücke 3a bis 3c mit den Gegenkontakten 10a bis 10c und die Erdungskontaktstücke 8a bis 8c mit den geerdeten Gegenkontakten 9a bis 9c verbunden sind. Dann wird der Leistungsschalter 2 wieder geschlossen.

Mit der erfindungsgemässen Schalterkombination lassen sich also alle Schaltzustände, die für eine Einfachsammelschiene nötig sind, auf einfache Weise herstellen, ohne dass unerwünschte Zwischenschaltstellungen auftreten. Es sind weder gesonderte Trennschalter noch Erdungseinrichtungen notwendig. Um zu verhindern, dass das Schaltrohr 1 gedreht wird, während der Leistungsschalter 2 geschlossen ist, oder dass der Leistungsschalter 2 betätigt wird, bevor das Schaltrohr 1 eine definierte Schaltposition erreicht hat, wird eine in den Figuren nicht dargestellte Verriegelung zwischen der Betätigungseinrichtung des Leistungsschalters 2 und der Drehvorrichtung für das Schaltrohr 1 vorgesehen. Die Verriegelung für die erfindungsgemässe Einrichtung ist einfacher und damit auch betriebssicherer auszuführen als bei herkömmlichen Mittelspannungsschaltanlagen, da die Umschalteinrichtung und der Leistungsschalter in einem Gehäuse integriert sind und nur zwei Antriebe, nämlich der Leistungsschalterantrieb und der Schaltrohrantrieb gegeneinander verriegelt werden müssen. Bei herkömmlichen Mittelspannungsschaltanlagen liegen Leistungsschalter, Trennschalter und Erdungsschalter unter Umständen weit auseinander, was längere Gestänge oder aufwendige elektrische Verriegelungseinrichtungen bedingt. Ausserdem weisen der Leistungsschalter, jeder Trennschalter und jeder Erdungsschalter getrennte Antriebe auf, die alle gegeneinander verriegelt werden müssen.

Durch den integrierten Einbau des Leistungsschalters 2 wird die gesamte Schalterkombination sehr kompakt. Wenn man wie im Beispiel nach den Figuren 1 bis 5 das Rohr 6 mit SF$_6$-Gas füllt und als Schaltrohr 1 ein Vakuumschaltrohr einsetzt, erreicht man eine besonders kleine Bauweise, die insbesondere in Kombination mit SF$_6$-Sammelschienen vorteilhaft ist. Durch die gekapselte Bauweise ist die Schalterkombination allen schädlichen Umwelteinflüssen entzogen. Die SF$_6$-Schaltstrecken und das Vakuumrohr sind praktisch wartungsfrei.

Bei der erfindungsgemässen Schalterkombination kommt man mit einem Stellantrieb für das Schaltrohr 1 und einem Antrieb für den Leistungsschalter 2 für alle erforderlichen Schaltstellungen einschliesslich der Erdungsstellungen von Sammelschienen und Abzweig aus. Bei konventionellen Mittelspannungsanlagen sind für den Leistungsschalter, jeden Trennschalter und ggf. für jeden Erdungsschalter gesonderte Antriebe erforderlich. Für die erfindungsgemässe Schalterkombination ergibt sich daher gegenüber herkömmlichen Mittelspannungsanlagen eine weitere Material- und Platzersparnis, sowie eine einfache Möglichkeit für eine kostengünstige Fernbetätigung.

Die beschriebene Anordnung weist nur wenige Dichtungsstellen auf, was insbesondere bei Anlagen, die mit SF$_6$ oder Vakuum arbeiten, von Vorteil ist. Die Erdung der Sammelschienen und des Abzweigs erfolgt bei der erfindungsgemässen Schalterkombination über den Leistungsschalter 2. Bei einem versehentlichen Erden einer unter Spannung stehenden Sammelschiene bzw. eines Abzweigs wird mit Einschalten des Leistungsschalters 2 der vorgeordnete Leistungsschalter ausgelöst. Daher wird auch in diesem Fall weder das Bedienungspersonal noch die Anlage gefährdet. Da der Leistungsschalter 2 eine grosse Anzahl von Schaltungen unter Kurzschluss ohne Beschädigung aushält, muss er nicht, wie z.B. sogenannte Erdungs-Draufschalter, nach einmaligem Schalten unter Kurzschluss ausgewechselt werden.

Die erfindungsgemässe Schalterkombination ist auf einfache Weise zur Anwendung in Zweifachsammelschienenanlagen ausbaufähig. Figur 1 zeigt bereits einen Flansch 6b zum Ansetzen einer zweiten Sammelschiene, der in Figur 1 mit einem Deckel 6c geschlossen ist. Die Figuren 6 bis 13 zeigen eine Schalterkombination zum Einsatz in Zweifachsammelschienenanlagen mit Unterbrechung beim Umschalten. Dabei zeigt Figur 6 einen Schnitt durch die Schalterkombination in radialer Richtung, Figur 7 zeigt einen Schnitt in axialer Richtung. Wie die Figuren 6 und 7 zeigen, kann für Zweifachsammelschienenanlagen mit Unterbrechung beim Umschalten dasselbe Schaltrohr 2 mit denselben Kontaktstücken 3a bis 3f eingesetzt werden. Die Schalterkombination für Zweifachsammelschienenanlagen unterscheidet sich von derjenigen für Einfachsammelschienenanlagen lediglich durch die Anordnung der Gegenkontakte 7a bis 7c, 9a bis 9c, 10a bis 10c, 11a bis 11c, 12a bis 12c und 24a bis 24c. Die drei Phasen 4a bis 4c der Sammelschiene 4 sind mit den Gegenkontakten 7a bis 7c, die drei Phasen 13a bis 13c der Sammelschiene 13 mit den Gegenkontakten 11a bis 11c, die drei Phasen 5a bis 5c des Abzweigs 5 mit den Gegenkontakten 10a bis 10c im Rohr 6 verbunden. Zwischen allen genannten Gegenkontakten der Sammelschiene 4, der Sammelschiene 13 und des Abzweigs 5 liegen jeweils mit dem geerdeten Rohr 6 verbundene Gegenkontakte 9a bis 9c, 12a bis 12c und 24a bis 24c. Damit liegt jedem der mit den Sammelschienen 4 bzw. 13 oder dem Abzweig 5 verbundenen Gegenkontakte ein geerdeter Gegenkontakt diametral gegenüber, so dass jeder dieser Gegenkontakte über den Leistungsschalter 2 geerdet werden kann. Die einer Phase zugeordneten geerdeten Gegenkontakte 12a bis 12c, 9a bis 9c und 24a bis 24c liegen jeweils in einer Ebene senkrecht zur Achse des Rohrs 6, wobei jede dieser Ebenen gegen die Ebene der derselben Phase zugeordneten Gegenkontakten 7a bis 7c, 11a bis 11c bzw. 5a bis 5c axial versetzt ist.

Die Figuren 6 bis 13 zeigen die verschiedenen Schaltstellungen, die für eine Zweifachsammelschienenanlage mit Unterbrechung beim Umschalten in Frage kommen. In Figur 6 sind die Sammelschienen 4, 13 und der Abzweig 10 ohne Erdung voneinander getrennt. In Figur 8 ist die Sammelschiene 4 mit dem Abzweig 5 verbunden, in Figur 9 ist der Abzweig 5 getrennt und die Sammelschiene 4 geerdet, in Figur 10 sind die beiden Sammelschienen 4 und 13 getrennt und der Abzweig 5 geerdet, in Figur 11 liegt der Abzweig 5 an der Sammelschiene 13, in Figur 12 ist der Abzweig 5 getrennt und die Sammelschiene 13 geerdet und in Figur 13 sind wiederum beide Sammelschienen getrennt und der Abzweig 5 geerdet. Der Übergang zwischen den einzelnen Schaltstellungen erfolgt wie bei der Schalterkombination für Einfachsammelschienen durch Öffnen des Leistungsschalters 2, Verdrehen des Schaltrohrs 1 und Schliessen des Leistungsschalters 2. Mit der erfindungsgemässen Schalterkombination können also auch alle bei einer Zweifachsammelschiene mit Unterbrechung beim Umschalten notwendigen Schaltstellungen ohne gesonderte Trennschalter und Erdungseinrichtungen erreicht werden.

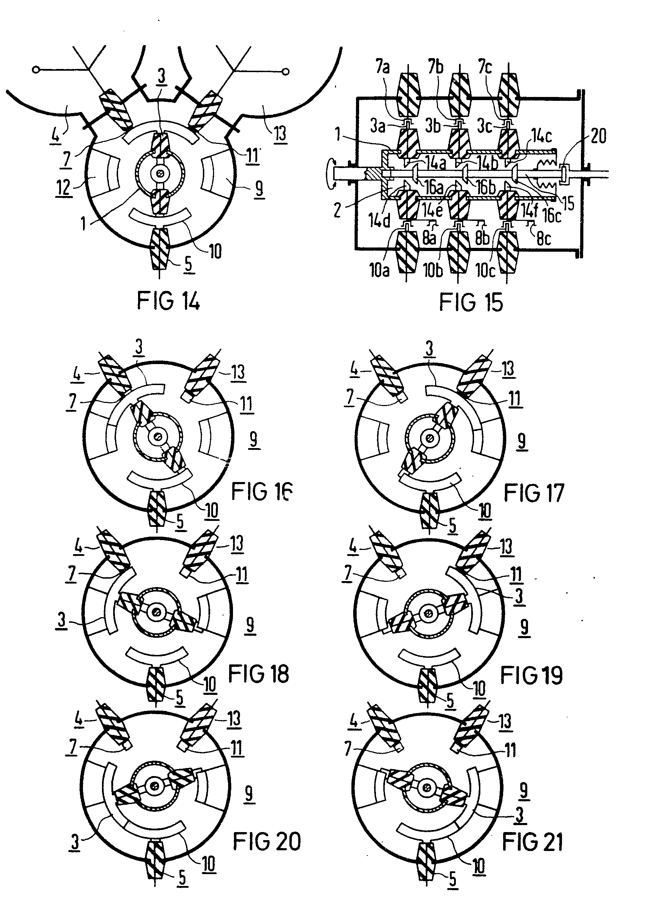

Die Figuren 14 bis 21 zeigen eine Schalterkombination für Zweifachsammelschienenanlagen mit unterbrechungsfreiem Umschalten zwischen den beiden Sammelschienen. Wie die Figuren 14 und 15 zeigen, liegt dabei der Unterschied im Vergleich zur Schalterkombination für Zweifachsammelschienen mit Unterbrechung beim Umschalten darin, dass die Kontaktstücke 3a bis 3c als flache Kreisringstücke ausgebildet sind, während die Gegenkontakte 7a bis 7c und 11a bis 11c als Kontaktfigur ausgebildet sind, die die Kontaktstücke federnd umgreifen. Ferner sind pro Phase nur zwei geordnete Gegenkontakte 9a bis 9c und 12a bis 12c vorhanden, die in der vorher beschriebenen Ausführung vorhandenen geerdeten Gegenkontakt 24a bis 24c entfallen. Der Winkel, den die kreisringförmigen Kontaktstücke 3a bis 3c umfassen, ist so gross, dass jedes Kontaktstück 3a bis 3c gleichzeitig mit den entsprechenden Phasen beider Sammelschienen 4 und 13 verbunden werden kann. In der Anlage muss ausserdem ein Kuppelschalter zum Verbinden der beiden Sammelschienen 4 und 13 vorhanden sein. Der Umschaltvorgang zwischen zwei Sammelschienen wird im folgenden anhand der Figuren 14, 16 und 17 erläutert. In der Schaltstellung nach Figur 16 ist der Abzweig 5 mit der Sammelschiene 4 verbunden. Soll der Abzweig 5 nun mit der Sammelschiene 13 verbunden werden, so wird zunächst der in der Anlage vorhandene Kuppelschalter geschlossen. Anschliessend wird das Schaltrohr 1 ohne Öffnen des Leistungsschalters 2 im Uhrzeigersinn verdreht. Dabei ist in einer Zwischenstellung der Abzweig 5 mit beiden Sammelschienen 4 und 13 verbunden, wie Figur 14 zeigt. Das Schaltrohr 1 wird bis zu der in Figur 17 gezeigten Stellung weitergedreht, wo schliesslich die Kontaktstücke 3a bis 3c nur noch mit der Sammelschiene 13 verbunden sind. Der Kuppelschalter kann wieder geöffnet werden, der Abzweig 5 ist damit unterbrechungsfrei von der Sammelschiene 4 auf die Sammelschiene 13 umgeschaltet.

In der Schaltstellung nach Figur 18 ist entsprechend der Figur 9 die Sammelschiene 4 geerdet und der Abzweig 5 getrennt. In der Schaltstellung nach Figur 19 ist entsprechend der Figur 12 die Sammelschiene 13 geerdet und der Abzweig 5 getrennt. In den Schaltstellungen nach Figur 20 und 21 schliesslich ist entsprechend den Figuren 10 und 13 jeweils der Abzweig 5 geerdet und beide Sammelschienen 4 und 13 sind getrennt. Da die Kontaktstücke 3a bis 3c als Kreisringstücke ausgebildet sind, stossen bei den Schaltstellungen nach den Figuren 20 und 21 die Kontaktstücke 3a bis 3c seitlich an die Gegenkontakte 10a bis 10c an. An den Berührungsstellen kann man zur Verbesserung des Kontakts z.B. an den Gegenkontakten 10a bis 10c in den Figuren nicht dargestellte, beidseitig federnde Kontaktklammern vorsehen, in die die Kontaktstücke 3a bis 3c seitlich eingreifen.

Wie die vorangehenden Ausführungen zeigen, kann man mit der erfindungsgemässen Schalterkombination alle Schaltstellungen, wie sie bei Zweifachsammelschienen sowohl mit als auch ohne Unterbrechung beim Umschalten nötig sind, herstellen. Auch bei der Anwendung für Zweifachsammelschienenanlagen kommt man mit einem Antrieb für Umschaltung und Erdung und einem Antrieb für den Leistungsschalter aus. Wie bei der Schalterkombination für Einfachsammelschienenanlagen lässt sich auch hier wegen der integrierten Bauweise eine einfache Verriegelung zwischen der Betätigung des Leistungsschalters und der Verdrehung des Schaltrohrs 1 verwirklichen.

Wie die Figuren 1 bis 21 zeigen, können für Schalterkombinationen für Einfach- und Zweifachsammelschienenanlagen mit und ohne Unterbrechung beim Umschalten sehr viele gleiche Bauelemente eingesetzt werden. Insbesondere sind das Schaltrohr 1 mit dem Leistungsschalter 2 und das Rohr 6 für Einfach- und Zweifachsammelschienen gleich. Damit lässt sich eine besonders rationelle und kostensparende Fertigung verwirklichen. Ausserdem ergeben sich besondere Vorteile bei der Ersatzteilhaltung.

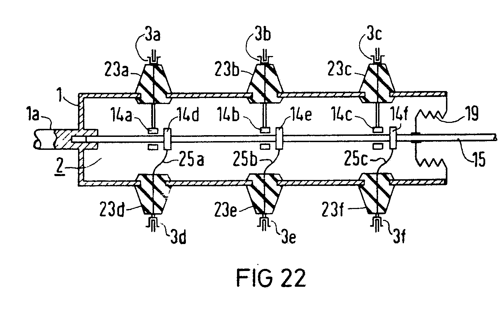

Figur 22 zeigt schliesslich noch eine zweite Ausführungsform für den Leistungsschalter 2. Dabei sind die Kontaktstücke 3a bis 3f ebenfalls über Isolatoren 23a bis 23f in das Innere des Schaltrohrs 1 geführt. Das Schaltrohr 1 ist evakuiert. Die Kontaktstücke 3a bis 3c sind mit den feststehenden Schaltkontakten 14a bis 14c im Schaltrohr 1 verbunden. Die Kontaktstücke 3d bis 3f sind über flexible Leitungen 25a bis 25c mit den Schaltkontakten 14d bis 14f verbunden. Die Schaltkontakte 14d bis 14f sind an der isolierten Schaltstange 15 befestigt und mit dieser in axialer Richtung beweglich. Die Schaltstange 15 ist durch zentrische Bohrungen der Schaltkontakte 14a bis 14c geführt. Die Abdichtung des Rohrs 1 mit der Schaltstange 15 erfolgt mit dem Faltenbalg 19. Es wäre auch möglich, entweder die Schaltstange oder die feststehenden Schaltkontakte 14a bis 14c nicht zentrisch im Rohr anzuordnen, wodurch es sich erübrigen würde, die Schaltstange 15 durch Bohrungen der feststehenden Kontakte 14a bis 14c zu führen. Es ist auch möglich, jeden beliebigen langgestreckten und kompakt gebauten Leistungsschalter in das Schaltrohr 1 einzubauen.

## Patentansprüche

1. Schalterkombination für Sammelschienenanlagen zum Verbinden mindestens einer Sammelschiene (4) mit mindestens einem Abzweig (5), wobei die Schalterkombination aus einem Rohr (6) mit einer im Rohr (6) axial angeordneten drehbaren Welle (1) besteht, wobei am inneren Umfang des Rohrs (6) stationäre Gegenkontakte (7,9,10) angeordnet sind und jeder Gegenkontakt (7,9,10) mit einer Phase einer Sammelschiene (4) oder eines Abzweigs verbunden ist und wobei die Welle (1) Kontaktstücke (3) trägt, die in einem Kreisbogen mit einem solchen Durchmesser um die Welle (1) angeordnet sind, dass durch Drehen der Welle (1) eine elektrisch leitende Verbindung zwischen den Kontaktstücken (3) und den zugeordneten Gegenkontakten (7,9,10) herstellbar ist, dadurch gekennzeichnet, dass die Welle als Schaltrohr (1) ausgebildet ist, das in seinem Inneren konzentrisch zu den Kontaktstücken (3) einen Leistungsschalter (2) enthält, wobei jeder Anschluss des Leistungsschalters (2) mit einem Kontaktstück (3) elektrisch leitend verbunden ist.

2. Schalterkombination nach Anspruch 1, dadurch gekennzeichnet, dass für wenigstens einen Teil der Phasen des Schienensystems ein gemeinsames Rohr (6) und ein gemeinsames Schaltrohr (1) mit einem alle Phasen schaltenden Leistungsschalter (2) vorhanden ist.

3. Schalterkombination nach Anspruch 1 oder 2, wobei die zu verschiedenen Phasen des angeschlossenen Schienensystems gehörenden Kontaktstücke auf einer gemeinsamen Welle in axialem Abstand angeordnet sind, dadurch gekennzeichnet, dass für jede Phase des Schienensystems zwei zugeordnete Kontaktstücke (3a bis 3f) vorhanden sind, die sich auf dem Schaltrohr (1) diametral gegenüberliegen und dass je zwei einer Phase zugeordnete Kontaktstücke (3a bis 3f) über je eine Schaltstrecke des Leistungsschalters (2) leitend verbindbar sind.

4. Schalterkombination nach Anspruch 3, dadurch gekennzeichnet, dass je ein Kontaktstück (3d bis 3f) zweier einer Phase zugeordneter Kontaktstücke (3a bis 3f) mit einem Erdungskontaktstück (8a bis 8c) leitend verbunden ist, wobei jedes Erdungskontaktstück (8a bis 8c) auf dem Schaltrohr (1) in axialem Abstand zum zugehörigen Kontaktstück (3d bis 3f) angeordnet ist und dass am inneren Umfang des Rohrs (6) je Phase ein geerdeter Gegenkontakt (9a bis 9c) angeordnet ist, mit dem durch Drehen des Schaltrohrs (1) je ein Erdungskontaktstück (8a bis 8c) leitend verbindbar ist.

5. Schalterkombination nach Anspruch 4 für eine Einfachsammelschiene und einen Abzweig, wobei die Gegenkontakte als Kreisringstücke ausgebildet sind, die in Umfangsrichtung einen Abstand zueinander aufweisen und wobei pro Phase drei Gegenkontakte vorhanden sind, dadurch gekennzeichnet, dass je ein Gegenkontakt (7a bis 7c) mit einer Phase (4a bis 4c) der Sammelschiene, je ein Gegenkontakt (10a bis 10c) mit derselben Phase des Abzweigs (5a bis 5c) und je ein Gegenkontakt (9a bis 9c) mit Erde verbunden ist und dass die Länge und Lage der Gegenkontakte (7,9,10) und die Form der Kontaktstücke (3,8) so aufeinander abgestimmt sind, dass je nach Stellung des Schaltrohrs (1) der Abzweig (5) mit der Sammelschiene (4) oder Erde oder die Sammelschiene (4) mit Erde durch Schliessen des Leistungsschalters (2) leitend verbindbar sind.

6. Schalterkombination nach Anspruch 4 für eine Zweifachsammelschiene und einen Abzweig, wobei die Gegenkontakte als Kreisringstücke ausgebildet sind, die in Umfangsrichtung einen Abstand zueinander aufweisen, dadurch gekennzeichnet, dass pro Phase sechs Gegenkontakte (7,9,10,11,12,24) vorhanden sind, wobei je ein Gegenkontakt (7) mit einer Phase der ersten Sammelschiene (4), je ein Gegenkontakt (11) mit derselben Phase der zweiten Sammelschiene (13), je ein Gegenkontakt (10) mit derselben Phase des Abzweigs (5) und je drei Gegenkontakte (9,12,24) mit Erde verbunden sind, wobei je ein geerdeter Gegenkontakt (9,12) zwischen dem mit dem Abzweig (5) verbundenen Gegenkontakt (9,12) zwischen dem mit dem Abzweig (5) verbundenen Gegenkontakt (10) und beiden mit den Sammelschienen (4,13) verbundenen Gegenkontakten (7,11) liegt und ein weiterer geerdeter Gegenkontakt (24) zwischen den mit den beiden Sammelschienen (4,13) verbundenen Gegenkontakten (7,11) liegt und wobei die Länge und Lage der Gegenkontakte (7,9,10,11,12,24) und die Form der Kontaktstücke (3,8) so aufeinander abgestimmt sind, dass je nach Stellung des Schaltrohrs (1) die Phasen des Abzweigs (5) wahlweise mit den entsprechenden Phasen der ersten Sammelschiene (4) oder der zweiten Sammelschiene (13) oder die Phasen der ersten oder zweiten Sammelschiene oder des Abzweigs mit den jeweils gegenüberliegenden geerdeten Gegenkontakten (9,12,24) durch Schliessen des Leistungsschalters (2) leitend verbindbar sind.

7. Schalterkombination nach Anspruch 4 für eine Zweifachsammelschiene und einen Abzweig, wobei die Gegenkontakte als Kreisringstücke ausgebildet sind, die in Umfangsrichtung einen Abstand zueinander aufweisen, dadurch gekennzeichnet, dass pro Phase fünf Gegenkontakte (7,9,10,11,12) vorhanden sind, dass je ein Gegenkontakt (7) mit einer Phase der ersten Sammelschiene (4), je ein Gegenkontakt (11) mit derselben Phase der zweiten Sammelschiene (13), je ein Gegenkontakt (10) mit derselben Phase des Abzweigs (5) und je zwei Gegenkontakte (9,12) mit Erde verbunden sind, und dass von den zwei geerdeten Gegenkontakten (9,12) je Phase ein erster geerdeter Gegenkontakt (12) zwischen dem mit dem Abzweig (5) verbundenen Gegenkontakt (10) und dem mit der ersten Sammelschiene (4) verbundenen Gegenkontakt (7) und ein zweiter geerdeter Gegenkontakt (9) zwischen dem mit dem Abzweig (5) verbundenen Gegenkontakt (10) und dem mit der zweiten Sammelschiene (13) verbundenen Gegenkontakt (11) liegt, wobei die Länge und Lage der Gegenkontakte (7,9,10,11,12) und die Form der Kontaktstücke (3,8) so aufeinander abgestimmt sind, dass je nach Stellung des Schaltrohrs (1) die Phasen des Abzweigs (5) wahlweise mit den entsprechenden Phasen der ersten Sammelschiene (4), der zweiten Sammelschiene (13) oder Erde oder die Phasen der ersten oder zweiten Sammelschiene mit Erde durch Schliessen des Leistungsschalters (2) leitend verbindbar sind, und wobei von je zwei einer Phase zugeordneten Kontaktstücken (3a bis 3f) ein Kontaktstück (3a bis 3c) als Kreisringstück ausgebildet ist, und dieses Kontaktstück in Umfangsrichtung so lang ist, dass es gleichzeitig mit den entsprechenden Phasen beider Sammelschienen (4,13) verbindbar ist.

8. Schalterkombination nach einem der Ansprüche 3 bis 7, dadurch gekennzeichnet, dass zur Ausbildung des Leistungsschalters (2) jedes Kontaktstück (3a bis 3f) mit einem feststehenden Schaltkontakt (14a bis 14f) im Inneren des Schaltrohrs (1) leitend verbunden ist und dass axial im Schaltrohr (1) eine in ihrer Längsrichtung bewegliche isolierte Schaltstange (15) angeordnet ist, die für je zwei einer Phase zugeordnete Schaltkontakte (14a bis 14f) eine Kontaktbrücke (16a bis 16c) trägt.

9. Schalterkombination nach einem der Ansprüche 3 bis 7, dadurch gekennzeichnet, dass zur Ausbildung des Leistungsschalters (2) jeweils von zwei einer Phase zugeordneten Kontaktstücken (3a bis 3f) eines mit einem feststehenden Schaltkontakt (14a bis 14c) und eines mit einem beweglichen Schaltkontakt (14d bis 14f) im Inneren des Schaltrohrs leitend verbunden ist und dass jeder bewegliche Schaltkontakt (14d bis 14f) an einer isolierten Schaltstange (15) befestigt ist, die axial im Schaltrohr (1) angeordnet und in ihrer Längsrichtung beweglich ist.

10. Schalterkombination nach Anspruch 8 oder 9, dadurch gekennzeichnet, dass das Schaltrohr (1) gasdicht gekapselt ist und dass die Schaltstange (15) über einen Faltenbalg (19) aus dem Schaltrohr (1) geführt ist.

11. Schalterkombination nach Anspruch 10, dadurch gekennzeichnet, dass das Schaltrohr (1) ein Vakuumschaltrohr ist.

12. Schalterkombination nach einem der Ansprüche 1 bis 11, dadurch gekennzeichnet, dass das Schaltrohr (1) einen in axialer Richtung abstehenden Betätigungsansatz (1a) aufweist, der aus dem Rohr (6) herausgeführt und drehbar gelagert ist.

13. Schalterkombination nach Anspruch 12, dadurch gekennzeichnet, dass die Schaltstange (15) an dem dem Betätigungsansatz (1a) gegenüberliegenden Ende aus dem Schaltrohr (1) herausgeführt ist und eine Kupplung (20) aufweist, die nur axiale Bewegungen überträgt, und dass diese Kupplung (20) mit einer Betätigungsstange (21) verbunden ist, die aus dem Rohr (6) herausgeführt und in axialer Richtung verschiebbar gelagert ist.

14. Schalterkombination nach einem der Ansprüche 1 bis 13, dadurch gekennzeichnet, dass das Rohr (6) gasdicht gekapselt und mit SF$_6$-Gas gefüllt ist.

**Claims**

1. A switch combination for busbar systems for connecting at least one busbar (4) to at least one branch (5), wherein the switch combination consists of a tube (6) and a rotatable shaft (1) arranged axially in the tube (6), wherein stationary countercontacts (7,9,10) are arranged on the inner peripheral surface of the tube (6), each countercontact (7,9,10) being connected to one phase of a busbar (4) or to a branch, and wherein the shaft (1) carries contact members (3) which are arranged around the shaft (1) on the arc of a circle the diameter of which is such that rotation of the shaft (1) allows an electrically-conductive connection to be established between the contact members (3) and the assigned counter contacts (7,9,10), characterised in that the shaft is in the form of a switching tube (1), in the interior of which is located a power switch (2) arranged concentrically with respect to the contact members (3), where each terminal of the power switch (2) is electrically conductively connected to a contact member (3).

2. A switch combination as claimed in Claim 1, characterised in that for at least a part of the busbar system, there is provided a common tube (6) and a common switching tube (1) with a power switch (2) which switches all phases.

3. A switch combination as claimed in Claim 1 or 2, in which the contact members assigned to different phases of the connected busbar system, are axially spaced on a common shaft, characterised in that for each phase of the busbar system, there are provided two assigned contact members (3a to 3f) which are arranged diametrically opposite to one another on the switching tube (1), and that two contact members (3a to 3f) assigned to one phase can, in each case, be conductively connected via a switching path of the power switch (2).

4. A switch combination as claimed in Claim 3, characterised in that one contact member (3d to 3f) of two contact members (3a to 3f) assigned to one phase is, in each case, conductively connected to an earthing contact member (8a to 8c), each earthing contact member (8a to 8c) being arranged on the switching tube (1) axially spaced from the associated contact member (3d to 3f), and that, for each phase, an earthed counter-contact (9a to 9c) is arranged on the inner peripheral surface of the tube (6) and can be conductively connected to one earthing contact member (8a to 8c) by rotation of the switching tube (1).

5. A switch combination as claimed in Claim 4 for a single busbar and one branch, wherein the countercontacts consist of parts of an annulus which are spaced from one another in the peripheral direction and wherein three counter-contacts are provided for each phase, characterised in that one counter contact (7a to 7c) is, in each case, connected to one phase (4a to 4c) of the busbar, one counter-contact (10a to 10c) is, in each case, connected to the same phase of the branch (5a to 5c), and one counter-contact (9a to 9c) is, in each case, connected to earth, and that the length and position of the counter-contacts (7,9,10) and the shape of the contact members (3,8) are so adapted to one another that, depending upon the position of the switching tube (1), by closure of the power switch (2) the branch (5) can be conductively connected to the busbar (4) or to earth, or the busbar (4) can be conductively connected to earth.

6. A switch combination as claimed in Claim 4 for a double busbar and one branch, wherein the counter-contacts consist of parts of an annulus which are spaced from one another in the peripheral direction, characterised in that six counter-contacts (7,9,10,11,12,24) are provided for each phase, one counter-contact (7) being, in each case, connected to one phase of the first busbar (4), one counter-contact (11) being, in each case, connected to the same phase of the second busbar (13), one counter-contact (10) being, in each case, connected to the same phase of the branch (5), and three counter-contacts (9,12,24) being, in each case, connected to earth, one earthed counter-contact (9,12) being, in each case, arranged between that counter-contact (10) which is connected to the branch (5) and the two counter-contacts (7,11) which are connected to the busbars (4,13), and a further earthed counter-contact (24) being arranged between those counter-contacts (7,11) which are connected to the two busbars (4,13), and wherein the length and position of the counter-contacts (7,9,10,11,12,24) and the shape of the contact members (3,8) are so adapted to one another that, depending upon the position of the switching tube (1), by closure of the power switch (2), the phases of the branch (5) can be selectively conductively connected to the corresponding phases of the first busbar (4), or of the second busbar (13), or alternatively, the phases of the first or the second busbar or of the branch can be conductively connected to the particular opposite earthed counter-contact (9,12,24).

7. A switch combination as claimed in Claim 4 for a double busbar and one branch, where the counter-contacts consist of parts of an annulus which are spaced from one another in the peripheral direction, characterised in that five counter-contacts (7,9,10,11,12) are provided for each phase, and that one counter-contact (7) is, in each case, connected to one phase of the first busbar (4), one counter-contact (11) is, in each case, connected to the same phase of the second busbar (13), one counter-contact (10) is, in each case, connected to the same phase of the branch (5), and two counter-contacts (9,12) are, in each case, connected to earth, and that, of the two earthed counter-contacts (9,12), for each phase, a first earthed counter-contact (12) is arranged between that counter-contact (10) which is connected to the branch (5) and the counter contact (7) which is connected to the first busbar (4) and a second earthed counter-contact (9) is arranged between that counter-contact (10) which is connected to the branch (5) and the counter-contact (11) which is connected to the second busbar (13), the length and position of the counter-contacts (7,9,10,11,12) and the shape of the contact members (3,8) being so adapted to one another that, depending upon the position of the switching tube (1), by closure of the power switch (2), the phases of the branch (5) can be selectively conductively connected to the corresponding phases of the first busbar (4), or of the second busbar (13), or to earth, or alternatively, the phases of the first or second busbar can be conductively connected to earth, and wherein, of two contact members (3a to 3f) assigned to one phase, one contact member (3a to 3c) is in the form of part of an annulus, the length of which in the peripheral direction is such that it can be simultaneously connected to the corresponding phases of the two busbars (4,13).

8. A switch combination as claimed in one of the Claims 3 to 7, characterised in that in the formation of the power switch (2), each contact member (3a to 3f) is conductively connected to a stationary switching contact (14a to 14f) inside the switching tube (1), and that an insulated switching rod (15) which can be moved in its longitudinal direction is arranged axially within the switching tube (1) and carries one contact bridge (16a to 16c) for each pair of switching contacts (14a to 14f) assigned to one phase.

9. A switch combination as claimed in one of the Claims 3 to 7, characterised in that in the formation of the power switch (2) of a pair of contact components (3a to 3f) assigned to one phase, one is conductively connected to a stationary switching contact (14a to 14c) and one is conductively connected to a movable switching contact (14d to 14f) within the switching tube, and that each movable switching contact (14d to 14f) is connected to an insulated switching rod (15) which is arranged axially within the switching tube (1) and can be moved in its longitudinal direction.

10. A switch combination as claimed in Claim 8 or 9, characterised in that the switching tube (1) is closed in gas-tight fashion, and that the switching rod (15) passes out of the switching tube (1) through a bellows (19).

11. A switch combination as claimed in Claim 10, characterised in that the switching tube (1) is a vacuum switching tube.

12. A switch combination as claimed in one of the Claims 1 to 11, characterised in that the switching tube (1) comprises a rotatably mounted, actuating attachment (1a) which projects in the axial direction and extends out of the tube (6).

13. A switch combination as claimed in Claim 12, characterised in that at its end remote from the actuating attachment (1a), the switching rod (15) extends out of the switching tube (1) and exhibits a coupling (20) which transmits only axial movements, and that this coupling (20) is connected to an actuating rod (21) which extends out of the tube (6) and is mounted so as to be displaceable in the axial direction.

14. A switch combination as claimed in one of the Claims 1 to 13, characterised in that the tube (6) is closed so as to be gas-tight and is filled with $SF_6$ gas.

## Revendications

1. Ensemble commutateur pour installations à barres collectrices en vue de la liaison d'au moins une barre collectrice (4) à au moins une dérivation (5), du type dans lequel l'ensemble commutateur se compose d'un tube (6) avec un arbre rotatif (1) disposé axialement dans le tube (6), dans lequel des contacts antagonistes fixes (7,9,10) sont disposés à la périphérie interne du tube (6) et sont reliés chacun à une phase d'une barre collectrice (4) ou d'une dérivation et dans lequel l'arbre (1) porte des pièces de contact (3) qui sont disposées en arc-de-cercle autour de l'arbre (1) avec un diamètre tel que, par rotation de l'arbre (1), une liaison électriquement conductrice puisse être établie entre les pièces de contact (3) et les contacts antagonistes (7,9,10) associés, caractérisé en ce que l'arbre est réalisé sous la forme d'un tube de commutation (1) qui contient intérieurement, et concentriquement aux pièces de contact (3), un commutateur de puissance (2), chaque borne du commutateur de puissance (2) étant reliée de façon électriquement conductrice à une pièce de contact (3).

2. Ensemble commutateur selon la revendication 1, caractérisé en ce que pour au moins une partie des phases du système à barres est prévu un tube commun (6) et un tube de commutation commun (1) avec un commutateur de puissance (2) commutant toutes les phases.

3. Ensemble commutateur selon la revendication 1 ou 2, dans lequel les pièces de contact appartenant à différentes phases du système à barres connecté sont disposées avec écartement axial entre elles sur un arbre commun, caractérisé en ce que pour chaque phase du système à barres deux pièces de contact (3a à 3f) associées sont prévues, qui sont diamétralement opposées sur le tube de commutation (1) et en ce que deux pièces de contact (3a à 3f), associées à une phase, peuvent être reliées de façon conductrice par l'intermédiaire d'une piste de commutation du commutateur de puissance (2).

4. Ensemble commutateur selon la revendication 3, caractérisé en ce qu'une pièce de contact (3d à 3f) parmi deux pièces de contact (3a à 3f) associées à une phase est reliée de façon conductrice à une pièce de contact (8a à 8c) de mise à la terre, chaque pièce de contact (8a à 8c) de mise à la terre étant disposée sur le tube de commutation (1), avec écartement axial par rapport à la pièce de contact associée (3d à 3f), et en ce qu'à la périphérie interne du tube (6), est disposé, pour chaque phase, un contact antagoniste (9a à 9c) mis à la terre et avec lequel peut être reliée de façon conductrice une pièce de contact (8a à 8c) de mise à la terre, par rotation du tube de commutation (1).

5. Ensemble commutateur selon la revendication 4 pour une barre collectrice simple et une dérivation, dans lequel les contacts antagonistes sont réalisés sous la forme de pièces annulaires qui présentent dans le sens circonférentiel un certain écart entre elles et dans lequel trois contacts antagonistes sont prévus pour chaque phase, caractérisé en ce qu'un contact antagoniste (7a à 7c) est relié à une phase (4a à 4c) de la barre collectrice, un contact antagoniste (10a à 10c) est relié à la même phase de la dérivation (5a à 5c) et un contact antagoniste (9a à 9c) est relié à la terre et en ce que la longueur et la position des contacts antagonistes (7,9,10) et la forme des pièces de contact (3,8) sont adaptées les unes aux autres, pour que, selon la position du tube de commutation (1), la dérivation (5) puisse être reliée de façon conductrice à la barre collectrice (4) ou à la terre ou à la barre collectrice (4) reliée à la terre par fermeture du commutateur de puissance (2).

6. Ensemble commutateur selon la revendication 4 pour une barre collectrice double et une dérivation, dans lequel les contacts antagonistes sont réalisés sous la forme de pièces circulaires qui sont écartées circonférentiellement les unes des autres, caractérisé en ce que, pour chaque phase, six contacts antagonistes (7,9,10,11,12,24) sont prévus, dont un contact antagoniste (7) est relié à une phase de la première barre collectrice (4), un contact antagoniste (11) est relié à la même phase de la seconde barre collectrice, un contact antagoniste (10) est relié à la même phase de dérivation (5) et trois contacts antagonistes (9,12,24) sont reliés à la terre, alors qu'un contact antagoniste (9,12) mis à la terre est situé entre le contact antagoniste (10) relié à la dérivation (5) et les deux contacts antagonistes (7,11) reliés aux barres collectrices (4,13) et qu'un autre contact antagoniste (24) mis à la terre est situé entre les contacts antagonistes (7,11) reliés aux deux barres collectrices (4,13), la réalisation étant telle que la longueur et la position des contacts antagonistes (7,9,10,11,12,24) et la forme des pièces de contact (3,8) sont adaptées les unes aux autres, pour que, selon la position du tube de commutation (1), les phases de la dérivation (5) puissent sélectivement être reliées de façon conductrice aux phases correspondantes de la première barre collectrice (4) ou de la seconde barre collectrice (13) ou que les phases des première ou seconde barres collectrices ou de la dérivation puissent être reliées par fermeture du commutateur de puissance (2), aux contacts antagonistes (9,12,24) mis à la terre et situées en vis-à-vis.

7. Ensemble commutateur selon la revendication 4 pour une barre collectrice double et une dérivation, dans lequel les contacts antagonistes sont réalisés sous la forme de pièces annulaires qui sont espacées circonférentiellement les unes des autres, caractérisé en ce que, pour chaque phase, cinq contacts antagonistes (7,9,10,11,12) sont prévus, en ce qu'un contact antagoniste (7) est relié à une phase de la première barre collectrice (4), un contact antagoniste (11) est relié à la même phase de la seconde barre collectrice (13), un contact antagoniste (10) est relié à la même phase de la dérivation (5) et deux contacts antagonistes (9,12) sont reliés à la terre, et en ce que parmi les deux contacts antagonistes (9,12) mis à la terre, et pour chaque phase, un premier contact antagoniste (12) mis à la terre est situé entre le contact antagoniste (10) relié à la dérivation (5) et le contact antagoniste (7) relié à la première barre collectrice et un second contact antagoniste (9) relié à la terre est situé entre le contact antagoniste (10) relié à la dérivation (5) et le contact antagoniste (11) relié à la seconde barre collectrice (13), la réalisation étant telle que la longueur et la position des contacts antagonistes (9,10,11,12) et la forme des pièces de contact (3,8) sont adaptées les unes aux autres pour que, selon la position de commutation, les phases de la dérivation (5) puissent sélectivement être reliées de façon conductrice aux phases correspondantes de la première barre collectrice (4), de la seconde barre collectrice (13) ou à la terre, ou que les phases des première ou seconde barres collectrices puissent être reliées à la terre par fermeture du commutateur de puissance (2), alors que parmi deux pièces de contact (3a à 3f) associées à une phase, une pièce de contact (3a à 3c) est réalisée sous la forme d'une pièce annulaire dont la longueur circonférentielle est telle qu'elle peut être reliée simultanément aux phases correspondantes des deux barres collectrices (4,13).

8. Ensemble commutateur selon l'une des revendications 3 à 7, caractérisé en ce qu'en vue de la réalisation du commutateur de puissance (2), chaque pièce de contact (3a à 3f) peut être reliée de façon conductrice à un contact fixe (14a à 14f) prévu à l'intérieur du tube de commutation (1) et en ce qu'axialement dans le tube de commutation (1) peut être disposée une tige de commutation (15) isolée, déplaçable longitudinalement, qui porte un pont de contact (16a à 16c) pour deux contacts (14a à 14f) associés à une phase.

9. Ensemble commutateur selon l'une des revendications 3 à 7, caractérisé en ce qu'en vue de la réalisation du commutateur de puissance (2), parmi deux pièces de contact (3a à 3f) associées à une phase, l'une est reliée de façon conductrice à un contact fixe (14a à 14c) et l'autre à un contact mobile (14d à 14f) prévu à l'intérieur du tube de commutation et en ce que chaque contact mobile (14d à 14f) est fixé à une tige de commutation (15) isolée, qui est disposée axialement dans le tube de commutation (1) et déplaçable longitudinalement.

10. Ensemble commutateur selon la revendication 8 ou 9, caractérisé en ce que le tube de commutation (1) est scellé de façon étanche aux gaz et en ce que la tige de commutation (15) est guidée hors du tube de commutation (1) par l'intermédiaire d'un soufflet (19).

11. Ensemble commutateur selon la revendication 10, caractérisé en ce que le tube de commutation (1) est un tube sous vide.

12. Ensemble commutateur selon l'une des revendications 1 à 11, caractérisé en ce que le tube de commutation (1) comporte une pièce rapportée ou appendice de manœuvre (1a) s'étendant axialement et qui est guidée hors du tube (6) et est supportée de façon à pouvoir tourner.

13. Ensemble commutateur selon la revendication 12, caractérisé en ce que la tige de commutation (15) est guidée hors du tube de commutation (1) à l'extrémité opposée à l'appendice de manœuvre (1a) et comporte un accouplement (20) qui ne transmet que des mouvements axiaux, et en ce que cet accouplement (20) est relié à une

tige de manœuvre (21) qui est guidée hors du tube (6) et est déplaçable axialement.

14. Ensemble commutateur selon l'une des revendications 1 à 13, caractérisé en ce que le tube (6) est scellé de façon étanche aux gaz et est rempli de gaz $SF_6$.

FIG 1

FIG 2

FIG 3

FIG 5

FIG 4

FIG 6

FIG 7

FIG 8

FIG 11

FIG 9

FIG 12

FIG 10

FIG 13

FIG 14

FIG 15

FIG 16

FIG 17

FIG 18

FIG 19

FIG 20

FIG 21

FIG 22